# EUROPEAN PATENT SPECIFICATION

(11) **EP 4 212 355 B1**
(45) Date of publication and mention of the grant of the patent: **02.07.2025**
(21) Application number: 22213120.3
(22) Date of filing: 13.12.2022
(51) Int. Cl.: B60C 3/04, B60C 15/02, B60C 15/06

(54) **PNEUMATIC TIRE**
LUFTREIFEN
PNEUMATIQUE

(30) Priority: 12.01.2022 JP 2022003234
(43) Date of publication of application: 19.07.2023
(73) Proprietor: Sumitomo Rubber Industries, Ltd., Kobe-shi, Hyogo 651-0072 (JP)
(72) Inventor: SAEKI, Tetsuro, Kobe-shi, 651-0072 (JP)
(74) Representative: Manitz Finsterwald Patent- und Rechtsanwaltspartnerschaft mbB

(56) References cited:
- WO-A1-2015/097926
- JP-A- 2017 136 967
- JP-A- 2018 154 164
- JP-A- 2021 059 194
- US-A- 5 885 385
- US-A1- 2018 111 425
- US-A1- 2020 023 690
- US-A1- 2021 300 128

## Description

### BACKGROUND OF THE INVENTION

### FIELD OF THE INVENTION

The present invention relates to an assembly of a wheel rim and a pneumatic tire.

### BACKGROUND ART

WO 2020/122240 A1 discloses a pneumatic tire for a small shuttle bus with a gross vehicle weight exceeding 3 tons. This type of pneumatic tire has a small diameter in order to secure a wide riding space. In addition, the pneumatic tire of WO 2020/122240 A1 has increased load bearing capacity by specifying the arrangement of the circumferential grooves, the ratio of the outer diameter of the tire to the wheel rim diameter, and the like.

US 2018/0111425 A1 discloses an assembly according to the preamble of claim 1. Other related tires or assemblies are known from US 5,885,385 A, JP 2017-136967 A, JP 2021-059194 A, WO 2015/097926 A1, US 2020/0023690 A1, JP 2018-154164 A and US 2021/0300128 A1.

### SUMMARY OF THE INVENTION

### PROBLEMS TO BE SOLVED BY THE INVENTION

Since the pneumatic tire of WO 2020/122240 A1 has a small diameter, the air volume for supporting the weight of the vehicle is reduced, and the tire cross-sectional height is small. For this reason, the pneumatic tire has a problem that strain is concentrated on the bead portions during running with heavy loads, and damage starting from the bead portion is likely to occur.

The present invention was made in view of the situation as described above, and a primary objective of the present invention is to improve the durability of the bead portions of a pneumatic tire mounted on a wheel rim whose rim diameter is 12 to 17 inches.

### MEANS FOR SOLVING THE PROBLEMS

According to the present invention, a pneumatic tire configured to be mounted on a wheel rim whose rim diameter is in a range from 12 to 17 inches,
has a ratio (SH/SW) of the cross-sectional height SH of the tire to the cross-sectional width SW of the tire which is in a range from 0.30 to 0.45, and
a ratio (RW/SW) between the width RW of the wheel rim and the cross-sectional width SW of the tire which is in a range from 0.78 to 0.99, and
comprises a pair of bead portions each with a bead core embedded therein, a bead apex rubber disposed in one of or each of the bead portions and extending radially outwardly from a radially outer surface of the bead core so as to have a radially outer end not positioned within a first region, a carcass ply extending between the bead portions and turned up around the bead core in each bead portion from the axially inside to the outside so as to form a pair of turned-up portions extending radially outward and a main portion therebetween, and an outside apex rubber disposed axially outward of each of the turned-up portions, wherein
the first region is defined between a first tire radial direction line and a second tire radial direction line, when the tire is mounted on a wheel rim, inflated to a specified internal pressure and loaded with no tire load, the specified internal pressure being an air pressure specified for the tire by a standard included in a standardization system on which the tire is based,
the first tire radial direction line is a straight line extending in the tire radial direction through a radially outer end of a contact area where the bead portion comes into contact with a flange of the wheel rim, and
the second tire radial direction line is a straight line extending in the tire radial direction through a position spaced 10 mm axially outward from the radially outer end of the contact area. The outside apex rubber is sheet-shaped and has a thickness of not more than 40 % of a maximum axial width of the bead apex rubber. The axial distance La between the radially outer end of the bead apex rubber and the radially outer end of the contact area is not more than 2 mm.

### EFFECTS OF THE INVENTION

The assembly according to the present invention can improve the durability of the bead portion by adopting the above configuration.

### BRIEF DESCRIPTION OF THE DRAWINGS

FIG 1 is a tire meridian sectional view of an assembly as an embodiment of the present invention.
FIG 2 and FIG 3 are enlarged views of one of the bead portions shown in FIG 1 which are the same view but differently provided with reference numbers.

### DETAILED DESCRIPTION OF THE INVENTION

An embodiment of the present invention will now be described in detail in conjunction with accompanying drawings.

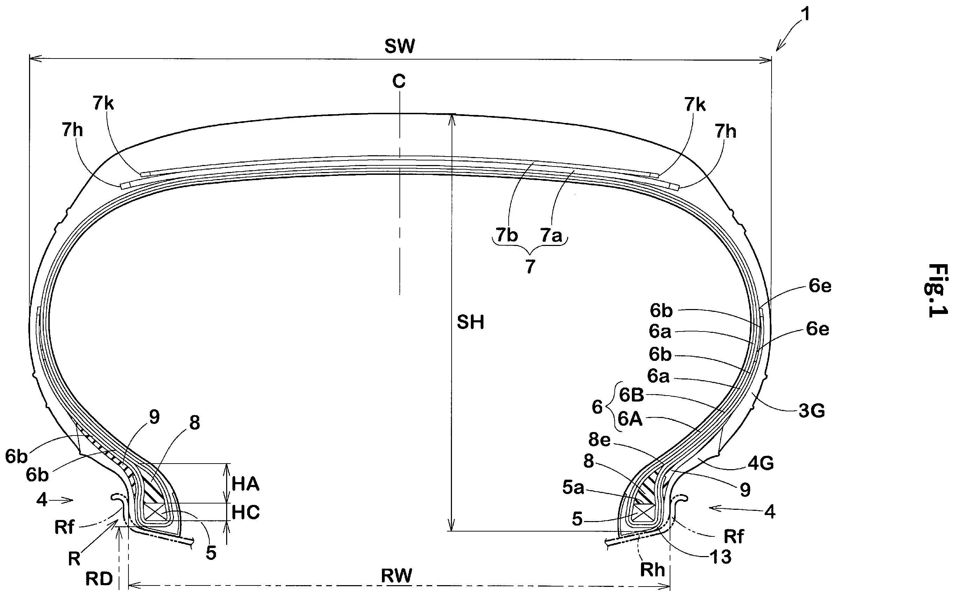

FIG 1 is a tire meridian sectional view including a tire rotation axis (not shown) of a pneumatic tire 1 as an embodiment of the present invention.

In the present embodiment, the tire 1 is used in a new small shuttle bus which focuses on transporting people and goods within cities. Buses of this type are required to have a large boarding space, and some of them have a gross vehicle weight exceeding 3 tons. Such bus may be an electric vehicle equipped with an in-wheel motor (not shown) and equipped with an automatic driving function. The present invention however, may be applied to tires for passenger cars, heavy duty vehicles and the like.

FIG 1 shows the tire 1 mounted on a wheel rim R and inflated to a specified internal pressure. The specified internal pressure refers to the internal pressure at which the tire 1 exhibits the best performance, for example, 400 to 1100 kPa, or 500 to 900 kPa.

When the tire 1 is for passenger cars or heavy duty vehicles, the prescribed internal pressure is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

In this application including specification and claims, various dimensions, positions and the like of the tire refer to those under the standard state unless otherwise noted, wherein the standard state is such a state that the tire is inflated to the prescribed internal pressure, and loaded with no tire load.

As for the wheel rim R, one that fits the tire 1 is adopted. When the tire 1 is for passenger cars or heavy duty vehicles, the wheel rim R is a wheel rim specified for the tire by a standard included in a standardization system on which the tire is based, for example, the "normal wheel rim" in JATMA, "Design Rim" in TRA, and "Measuring Rim" in ETRTO.

The tire 1 is mounted on a wheel rim R whose rim diameter RD in a range from 12 to 17 inches. Thus, the tire 1 of the present invention has a small diameter for the vehicle size.

The tire 1 has a ratio (SH/SW) of the tire cross-sectional height SH to the tire cross-sectional width SW which is in a range from 0.30 to 0.45, and
a ratio (RW/SW) of the rim width RW of the wheel rim R to the tire cross-sectional width SW which is in a range from 0.78 to 0.99.

Thereby, the tire 1 of the present invention can secure a low aspect ratio and an air volume for supporting the weight of the vehicle.

As such tire 1, for example, a size of 205/40R15 or 215/45R12 is suitable.

On the other hand, the rim width of a wheel rim R suitable for the tire 1 of these sizes is 7.0J or 7.5J.

In addition, in the tire 1 of the present invention, it is preferable that the wheel rim R has a large space for accommodating an in-wheel motor

The rim diameter RD is the outer diameter of the main portion (or bead seat) Rh (flange Rf is not included) of the wheel rim R.

The cross-sectional width SW of the tire is the maximum axial width of the tire 1 excluding axially protruding rim protectors (not shown).

The cross-sectional height SH of the tire is the radial distance between the radially outermost end of the tread portion 2 of the tire 1, and a radial position corresponding to the wheel rim diameter RD. A line extending parallel to the tire axial direction through the above-said radial position is known as the bead base line. The wheel rim width RW is the axial distance between the radially inner ends of the flanges Rf on both sides in the tire axial direction. When the tire 1 is for passenger cars or heavy duty vehicles, the rim diameter RD and rim width RW may be determined on the basis of the JATMA standard on which the wheel rim R is based.

The tire 1 comprises a pair of bead portions 4 each with a bead core 5 embedded therein. One of or each of the bead portions 4 is provided with a bead apex rubber 8 extending radially outwardly from the radially outer surface 5a of the bead core 5. In the present embodiment, the bead apex rubber 8 is disposed in each of the bead portions 4. Structurally, strain tends to concentrate on the radially outer end 8e of the bead apex rubber 8.

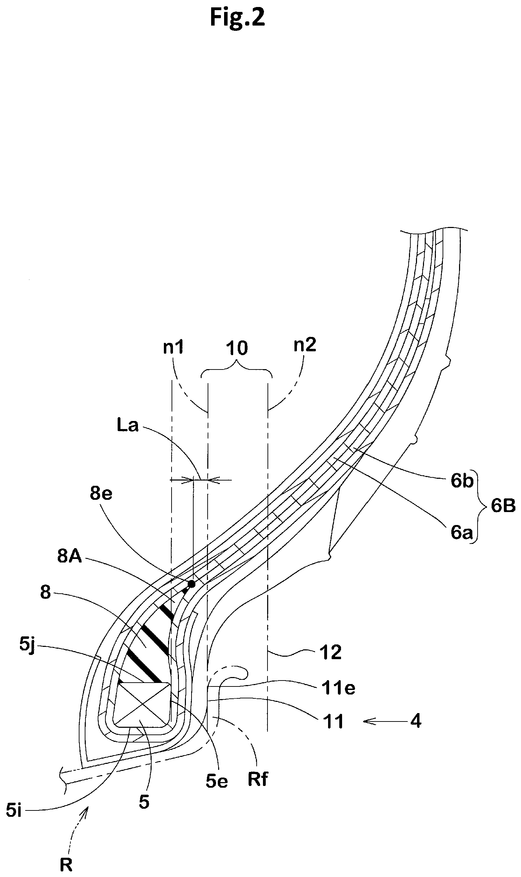

FIG 2 is an enlarged view of the bead portion 4 shown in FIG 1.

In the present invention, a first region 10 is defined in the bead portion 4 as shown in FIG 2. The first region 10 is defined between a first tire radial direction line n1 and a second tire radial direction line n2.

The first tire radial direction line n1 is a straight line extending in the tire radial direction through the radially outer end 11e of the contact area 11 where the bead portion 4 comes into contact with the flange Rf of the wheel rim R.

The second tire radial direction line n2 is a straight line extending in the tire radial direction through an axial position 12 spaced 10 mm axially outward from the radially outer end 11e of the contact area 11.

The first region 10 is a region where large strain concentrates during running with heavy loads.

In the present embodiment, the radially outer end 11e of the contact area 11 is positioned radially inside the radially outer end 5j of the bead core 5.

According to the present invention, the radially outer end 8e of the bead apex rubber 8 is not located within the first region 10. Therefore, damage starting from the radially outer end 8e is suppressed, and the durability of the bead portion 4 is improved.

As shown in FIG 1, the tire 1 comprises a carcass 6 extending between the bead cores 5 in the present embodiment.

Further, the tire 1 comprises a tread reinforcing belt 7, an outside apex rubber 9, a sidewall rubber 3G, a clinch rubber 4G, and a chafer 13.

The carcass 6 comprises at least one carcass ply (6A, 6B) made of rubberized carcass cords (not shown) and extending between the bead portions 4 through the tread portion 2 and the sidewall portions 3, and turned-up around the bead core 5 in each of the bead portions 4 from the inside to the outside in the tire axial direction so as to form a pair of turned-up portions 6b and a main portion 6a therebetween.

In the present embodiment, the carcass 6 is composed of two carcass plies 6A and 6B arranged inside and outside in the tire radial direction in the tread portion 2 although the carcass 6 may be composed of a single carcass ply (6A, 6B).

Each of the turned-up portions 6b extends radially outwardly, and the radially outer end 6e thereof is positioned radially outside the radially outer end 8e of the bead apex rubber 8 in the present embodiment.

In the present embodiment, the tread reinforcing belt 7 is disposed in the tread portion 2 and composed of a radially inner belt ply 7a and a radially outer belt ply 7b. The axial edges 7h of the radially inner belt ply 7a are respectively positioned axially outside the axial edges 7k of the radially outer belt ply 7b.

Each of the belt plies 7a and 7b is made of rubberized parallel belt cords (not shown), for example, steel cords. As to the structure of the belt, those for general truck/bus tires may be adopted.

As shown in FIG 2, the bead apex rubber 8 is disposed between the main portion 6a and each of the turned-up portion 6b of the radially outer carcass ply 6B so that the bead apex rubber 8 is in contact with the axially outer side of the main portion 6a and the axially inner side of the turned-up portion 6b.

In the present embodiment, the radially outer end 8e of the bead apex rubber 8 is located axially inside than the first region 10. That is, the bead apex rubber 8 does not exist in the first region 10. Accordingly, the interface between the bead apex rubber 8 and the carcass ply is not formed in the first region 10, so damage due to carcass play separation does not occur, and the durability of the bead portion 4 is further improved. If the radially outer end 8e of the bead apex rubber 8 is positioned axially outside the first region 10, the interface is formed, but damage originating from the radially outer end 8e is suppressed, therefore, the durability of the bead portion 4 may be improved.

It is preferable that the axial distance La between the radially outer end 8e of the bead apex rubber 8 and the radially outer end 11e of the contact area 11 is 2 mm or less. If the radially outer end 8e of the bead apex rubber 8 is disposed at a position more than 2 mm axially inward of the radially outer end 11e of the contact area 11, it becomes difficult to increase the rigidity around the radially outer end 11e where a particularly large strain occurs, and thereby the durability may not be improved.

It is preferable that the bead apex rubber 8 has complex elastic modulus E* of 25 MPa or more, more preferably 30 MPa or more, but 40 MPa or less, more preferably 35 MPa or less.

The complex elastic modulus E* was measured under the following conditions according to the Japanese Industrial Standard (JIS) K6394 by using a spectrometer manufactured by Ueshima Seisakusho Co., Ltd.
temperature: 70 degrees C.
amplitude of dynamic strain: 1%
frequency: 10Hz

The bead apex rubber 8 has its radially outer portion 8A positioned axially outside the axially outer end 5e of the bead core 5 as shown in FIG 2.

In the tire meridian cross section, the ratio (So/S) of the cross-sectional area So of the radially outer portion 8A to the cross-sectional area S of the bead apex rubber 8 is preferably 0.2 or more. Since the ratio (So/S) is 0.2 or more, the rigidity of the portion axially outside the bead core 5 is maintained, thereby distortion due to running is suppressed, and durability is improved.

In order to enhance such action, the ratio (So/S) is more preferably 0.25 or more.

If the ratio (So/S) is excessively large, a large load due to running may be applied to the radially inner portion of the bead apex rubber 8, and as result, the durability may be deteriorated. Therefore, the ratio (So/S) is preferably 0.35 or less, more preferably 0.30 or less.

As shown in FIG 1, the radial height HA of the bead apex rubber 8 is preferably not less than 175%, more preferably not less than 200%, but preferably not more than 275%, more preferably not more than 250% of the radial height HC of the bead core 5. As a result, the above effects are effectively exhibited.

The radially outer ends 8e of the bead apex rubbers 8 are respectively positioned axially inside the axial edges 7h of the radially inner belt ply 7a. And the radially outer ends 8e of the bead apex rubbers 8 are respectively positioned axially outside the axial edges 7k of the radially outer belt ply 7b in the present embodiment.

The outside apex rubber 9 is disposed axially outside the turned-up portion 6b. In the present embodiment, the outside apex rubber 9 is disposed adjacently to the axially outer side of the turned-up portion 6b of the inner carcass ply 6A.

In the present embodiment, the outside apex rubber 9 has a complex elastic modulus E* which is the same as that of the bead apex rubber 8. As a result, the difference in the amount of strain between the bead apex rubber 8 and the outside apex rubber 9 is reduced, so strain is less likely to occur in the entire bead portion, and the effect of improving durability is exhibited.

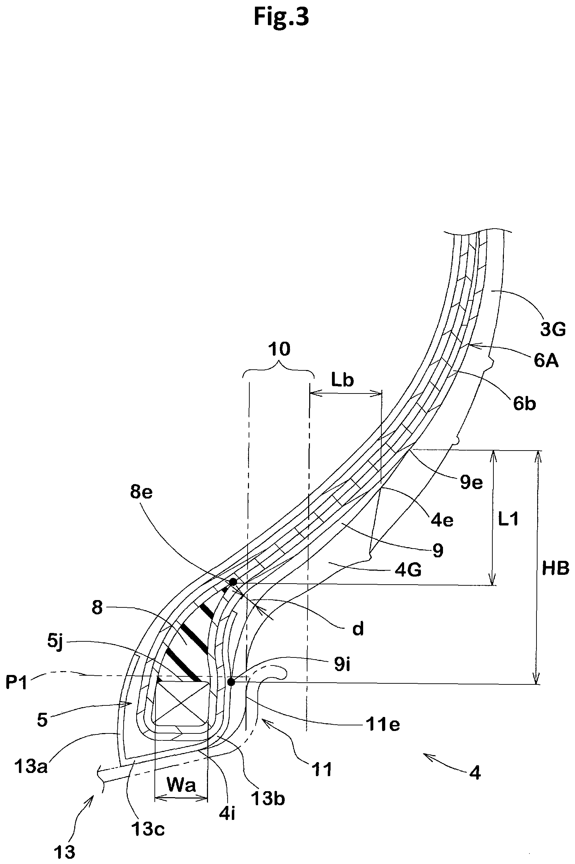

FIG 3 is an enlarged view of the bead portion 4. As shown in FIG 3, the outside apex rubber 9 is formed in a sheet shape with a thickness "d" of 40% or less of the maximum axial width Wa of the bead apex rubber 8.

Such outside apex rubber 9 maintains the width of the bead portion 4 small to ensure deformation (deflection) during running, and disperses the load to enhance the durability.

The radially inner end 9i of the outside apex rubber 9 is positioned radially inside a radial position P1 which is 2 mm radially outward from the radially outer end 5j of the bead core 5. As a result, the rigidity step difference in the vicinity of the bead core 5 is reduced, and the durability of the bead portion 4 is further improved.

In the present embodiment, the radially inner end 9i of the outside apex rubber 9 is located radially outside the radially outer end 5j of the bead core 5.

In addition, the radially inner end 9i of the outside apex rubber 9 is located radially outside the radially outer end 11e of the contact area 11.

The radially outer end 9e of the outside apex rubber 9 is disposed at a position axially outwardly spaced apart from the first region 10 by 10 mm or more. As a result, the rigidity of the bead portion 4 is enhanced, and the durability is further improved. The axial distance Lb between the radially outer end 9e of the outside apex rubber 9 and the first region 10 (the position 12 shown in FIG 2) is preferably not less than 160%, more preferably not less than 180%, but preferably not more than 240%, more preferably not more than 220% of the maximum width Wa of the bead apex rubber 8.

In the present embodiment, the radially outer end 9e of the outside apex rubber 9 is located radially outside the radially outer end 4e of the clinch rubber 4G

The distance L1 in the tire radial direction between the radially outer end 9e of the outside apex rubber 9 and the radially outer end 8e of the bead apex rubber 8 is preferably not less than 50%, more preferably not less than 55%, but preferably not more than 70%, more preferably not more than 65% of the radial height HB of the outside apex rubber 9.

The radial height HB of the outside apex rubber 9 is preferably not less than 200%, more preferably not less than 220%, but preferably not more than 280%, more preferably not more than 260% of the radial height HA (shown in FIG 1) of the bead apex rubber 8.

As a result, the above effects are effectively exhibited.

In the present embodiment, the sidewall rubber 3G and the clinch rubber 4G may be made of various well-known materials.

The clinch rubber 4G is, for example, disposed adjacently to the radially inner side of the sidewall rubber 3G

The clinch rubber 4G comprises a portion coming into contact with the wheel rim.

The radially inner end 4i of the clinch rubber 4G is positioned radially inside the radially inner end 5i of the bead core 5 as shown in FIG 3.

In the present embodiment, the chafer 13 is formed in a U shape composed of a first portion 13a, a second portion 13b and a third portion 13c.

The third portion 13c is positioned radially inside the radially inner end 5i of the bead core 5, and extends along the bead base so as to be able to contact with the bead seat of the wheel rim R.

The first portion 13a extends radially outwardly from the axially inner end of the third portion 13c, facing the inner cavity of the tire 1.

The second portion 13b extends radially outwardly from the axially outer end of the third portion 13c. In the present embodiment, the second portion 13b extends between the turned-up portion 6b of the inner carcass ply 6A and the outside apex rubber 9,

While detailed description has been made of a preferable embodiment of the present invention, the present invention can be embodied in various forms without being limited to the illustrated embodiment.

### Comparison tests

Based on the structure shown in FIG 1, pneumatic tires were experimentally manufactured as test tires (Comparative Example and Examples 1-7 according to the present invention), and tested for the bead durability.

Specifications of the test tires are shown in Table 1.

Common specifications to all the test tires and the test method are as follows.

### < Bead durability test >

Using test vehicles, the test tires were run under the following conditions to measure the running distance until damage was occurred in the bead portions.
Tire size: 205/40R15
Rim size: 7.0J
Tire inflation pressure: 520 kPa
SH/SW: 0.40
RW/SW: 0.87
Test vehicle: E-Pallet manufactured by Toyota Motor Corporation

The results are indicated in Table 1 by an index based on Example 1 being 100, wherein values of 95 or higher are acceptable.

In Table 1, the minus sign "-" of La means that the radially outer end 8e of the bead apex rubber 8 was positioned axially outside the radially outer end 11e of the contact area 11. In Table 1, "*1" means that the radially inner end 9i of the outside apex rubber 9 was positioned 5 mm radially outward from the radially outer end 5j of the bead core 5. In Table 1, "*2" means that the radially outer end 9e of the outside apex rubber 9 was positioned 5 mm axially outward from the radially outer end 11e of the contact area 11.

**Table 1**

| Tire | Comparative example | Example 1 | Example 2 | Example 3 | Example 4 | Example 5 | Example 6 | Example 7 |
|---|---|---|---|---|---|---|---|---|
| La (mm) | -5.0 | 2.0 | 2.0 | 2.0 | 2.0 | 2.0 | 2.0 | -15.0 |
| Ratio (Sa/S) | 0.25 | 0.25 | 0.1 | 0.25 | 0.25 | 0.25 | 0.25 | 0.25 |
| Outside apex rubber | Absence | Absence | Absence | Presence | Presence | Presence | Presence | Presence |
| Second apex rubber inner end position | -- | -- | -- | @P1 | *1 | @P1 | @P1 | @P1 |
| Lb (mm) | -- | -- | -- | 10 | 10 | 5 | *2 | 10 |
| Durability | 90 | 100 | 95 | 110 | 105 | 105 | 100 | 108 |

From the test results, it was confirmed that Example tires according to the present invention were improved in bead durability as compared to Comparative example tire.

### DESCRIPTION OF THE REFERENCE SIGNS

1 pneumatic tire
4 bead portion
5 bead core
5a radially outer surface
8 bead apex rubber
8e radially outer end
R wheel rim
Rf rim flange
10 first region
11 contact area
11e radially outer end
n1 first tire radial direction line
n2 second tire radial direction line

## Claims

1. An assembly of a wheel rim (R) whose rim diameter (RD) is in a range from 12 to 17 inches and a pneumatic tire (1) mounted on the wheel rim, wherein a ratio (SH/SW) of the cross-sectional height SH of the tire (1) to the cross-sectional width SW of the tire (1) is in a range from 0.30 to 0.45, and a ratio (RW/SW) between the width RW of the wheel rim (R) and the cross-sectional width SW of the tire (1) is in a range from 0.78 to 0.99,
the pneumatic tire (1) comprising a pair of bead portions (4) each with a bead core (5) embedded therein, a bead apex rubber (8) disposed in one of or alternatively each of the bead portions (4) and extending radially outwardly from a radially outer surface (5a) of the bead core (5) so as to have a radially outer end (8e) not positioned within a first region (10), a carcass ply (6A, 6B) extending between the bead portions (4) and turned up around the bead core (5) in each bead portion (4) from the axially inside to the outside so as to form a pair of turned-up portions (6b) extending radially outward and a main portion (6a) therebetween, and an outside apex rubber (9) disposed axially outward of each of the turned-up portions (6b),
wherein the first region (10) is defined between a first tire radial direction line (n1) and a second tire radial direction line (n2), when the tire (1) is mounted on a wheel rim (R), inflated to a specified internal pressure and loaded with no tire load, the specified internal pressure being an air pressure specified for the tire (1) by a standard included in a standardization system on which the tire (1) is based,
the first tire radial direction line (n1) is a straight line extending in the tire radial direction through a radially outer end (11e) of a contact area (11) where the bead portion (4) comes into contact with a flange (Rf) of the wheel rim (R), and
the second tire radial direction line (n2) is a straight line extending in the tire radial direction through a position spaced 10 mm axially outward from the radially outer end (11e) of the contact area (11),
**characterized in that** the outside apex rubber (9) is sheet-shaped and has a thickness (d) of not more than 40 % of a maximum axial width (Wa) of the bead apex rubber (8) and the axial distance La between the radially outer end (8e) of the bead apex rubber (8) and the radially outer end (11e) of the contact area (11) is not more than 2 mm.

2. The assembly according to claim 1, wherein
the radially outer end (8e) of the bead apex rubber (8) is positioned axially inside than the first region (10).

3. The assembly according to claim 1 or 2, wherein
the bead apex rubber (8) has its radially outer portion (8A) positioned axially outside the axially outer end (5e) of the bead core (5), and
in a meridian cross section of the tire (1), the cross-sectional area of the radially outer portion (8A) is not less than 0.2 times the cross-sectional area of the bead apex rubber (8).

4. The assembly according to any one of the preceding claims, wherein
the radially inner end (9i) of the outside apex rubber (9) is positioned radially inward than a radial position (P1) 2 mm radially outward from the radially outer end (5j) of the bead core (5).

5. The assembly according to any one of the preceding claims, wherein
the radially outer end (9e) of the outside apex rubber (9) is disposed at an axial position (12) at least 10 mm axially outward from the first region (10).

## Patentansprüche

1. Anordnung aus einer Radfelge (R), deren Felgendurchmesser (RD) in einem Bereich von 12 bis 17 Zoll liegt, und einem auf die Radfelge aufgezogenen Luftreifen (1), wobei ein Verhältnis (SH/SW) der Querschnittshöhe SH des Reifens (1) zu der Querschnittsbreite SW des Reifens (1) in einem Bereich von 0,30 bis 0,45 liegt und ein Verhältnis (RW/SW) zwischen der Breite RW der Radfelge (R) und der Querschnittsbreite SW des Reifens (1) in einem Bereich von 0,78 bis 0,99 liegt,
wobei der Luftreifen (1) ein Paar Wulstabschnitte (4) mit jeweils einem darin eingebetteten Wulstkern (5), einen Wulstkernreitergummi (8), der in einem oder alternativ jedem der Wulstabschnitte (4) angeordnet ist und sich von einer radial äußeren Oberfläche (5a) des Wulstkerns (5) radial nach außen erstreckt, so dass er ein radial äußeres Ende (8e) aufweist, das nicht innerhalb eines ersten Bereichs (10) positioniert ist, eine Karkasslage (6A, 6B), die sich zwischen den Wulstabschnitten (4) erstreckt und um den Wulstkern (5) in jedem Wulstabschnitt (4) von der axialen Innenseite zur Außenseite umgeschlagen ist, so dass ein Paar Umschlagabschnitte (6b), die sich radial nach außen erstrecken, und ein Hauptabschnitt (6a) dazwischen gebildet sind, und einen außenseitigen Wulstkernreitergummi (9), der axial außen von jedem der Umschlagabschnitte (6b) angeordnet ist, umfasst, wobei der erste Bereich (10) zwischen einer ersten Reifenradialrichtungslinie (n1) und einer zweiten Reifenradialrichtungslinie (n2) definiert ist, wenn der Reifen (1) auf eine Radfelge (R) aufgezogen, auf einen festgelegten Innendruck aufgeblasen und nicht mit einer Reifenlast belastet ist, wobei der festgelegte Innendruck ein Luftdruck ist, der für den Reifen (1) durch einen Standard festgelegt ist, der in einem Standardisierungssystem enthalten ist, auf dem der Reifen (1) basiert,
die erste Reifenradialrichtungslinie (n1) eine gerade Linie ist, die sich in der Reifenradialrichtung durch ein radial äußeres Ende (11e) eines Kontaktbereichs (11) erstreckt, wo der Wulstabschnitt (4) mit einem Horn (Rf) der Radfelge (R) in Kontakt kommt, und
die zweite Reifenradialrichtungslinie (n2) eine gerade Linie ist, die sich in der Reifenradialrichtung durch eine Position erstreckt, die 10 mm axial nach außen hin von dem radial äußeren Ende (11e) des Kontaktbereichs (11) beabstandet ist,
**dadurch gekennzeichnet, dass** der außenseitige Wulstkernreitergummi (9) plattenförmig ist und eine Dicke (d) von nicht mehr als 40 % einer maximalen axialen Breite (Wa) des Wulstkernreitergummigummis (8) aufweist und der axiale Abstand La zwischen dem radial äußeren Ende (8e) des Wulstkernreitergummigummis (8) und dem radial äußeren Ende (11e) des Kontaktbereichs (11) nicht mehr als 2 mm beträgt.

2. Anordnung nach Anspruch 1, wobei das radial äußere Ende (8e) des Wulstkernreitergummigummis (8) axial innen von dem ersten Bereich (10) positioniert ist.

3. Anordnung nach Anspruch 1 oder 2, wobei
der radial äußere Abschnitt (8A) des Wulstkernreitergummis (8) axial außen von dem axial äußeren Ende (5e) des Wulstkerns (5) positioniert ist und
in einem Meridianquerschnitt des Reifens (1) die Querschnittsfläche des radial äußeren Abschnitts (8A) nicht weniger als das 0,2-fache der Querschnittsfläche des Wulstkernreitergummigummis (8) beträgt.

4. Anordnung nach einem der vorhergehenden Ansprüche, wobei das radial innere Ende (9i) des außenseitigen Wulstkernreitergummigummis (9) radial weiter innen als eine radiale Position (P1) 2 mm radial außen von dem radial äußeren Ende (5j) des Wulstkerns (5) positioniert ist.

5. Anordnung nach einem der vorhergehenden Ansprüche, wobei das radial äußere Ende (9e) des außenseitigen Wulstkernreitergummigummis (9) an einer axialen Position (12) mindestens 10 mm axial nach außen hin von dem ersten Bereich (10) angeordnet ist.

## Revendications

1. Assemblage d'une jante de roue (R) dont un diamètre de jante (RD) est dans une plage allant de 12 à 17 pouces et d'un bandage pneumatique (1) monté sur la jante de roue, dans lequel un rapport (SH/SW) de la hauteur de section transversale SH du pneumatique (1) sur la largeur de section transversale SW du pneumatique (1) est dans une plage allant de 0,30 à 0,45, et un rapport (RW/SW) entre la largeur RW de la jante de roue (R) et la largeur de section transversale SW du pneumatique (1) est dans une plage allant de 0,78 à 0,99,
le bandage pneumatique (1) comprenant une paire de portions de talon (4) avec chacune une âme de talon (5) noyée à l'intérieur, un caoutchouc d'apex de talon (8) disposé dans l'une, ou alternativement dans chacune, des portions de talon (4) et s'étendant radialement à l'extérieur depuis une surface radialement extérieure (5a) de l'âme de talon (5) de manière à avoir une extrémité radialement extérieure (8e) qui n'est pas positionnée à l'intérieur d'une première région (10), une nappe de carcasse (6A, 6B) s'étendant entre les portions de talon (4) et retroussée autour de l'âme de talon (5) dans chaque portion de talon (4) depuis l'intérieur, dans une direction axiale, jusqu'à l'extérieur, de manière à former une paire de portions retroussées (6b) s'étendant radialement vers l'extérieur et une portion principale (6a) entre celles-ci, et un caoutchouc d'apex extérieur (9) disposé axialement à l'extérieur de chacune des portions retroussées (6b),
dans lequel la première région (10) est définie entre une première ligne de direction radiale du pneumatique (n1) et une seconde ligne de direction radiale du pneumatique (n2), quand le pneumatique (1) est monté sur une jante de roue (R), est gonflé à une pression interne spécifiée et n'est chargé d'aucune charge de pneumatique, la pression interne spécifiée étant une pression d'air spécifiée pour le pneumatique (1) par un standard inclus dans un système de standardisation sur lequel repose le pneumatique (1),
la première ligne de direction radiale du pneumatique (n1) est une ligne droite s'étendant dans la direction radiale du pneumatique à travers une extrémité radialement extérieure (11e) d'une zone de contact (11) où la portion de talon (4) vient en contact avec une bride (Rf) de la jante de roue (R), et
la seconde ligne de direction radiale du pneumatique (n2) est une ligne droite s'étendant dans la direction radiale du pneumatique à travers une position espacée de 10 mm axialement vers l'extérieur par rapport à l'extrémité radialement extérieure (11e) de la zone de contact (11),
**caractérisé en ce que** le caoutchouc d'apex extérieur (9) est en forme de feuille et a une épaisseur (d) qui n'est pas supérieure à 40 % d'une largeur axiale maximum (Wa) du caoutchouc d'apex de talon (8) et la distance axiale La entre l'extrémité radialement extérieure (8e) du caoutchouc d'apex de talon (8) et l'extrémité radialement extérieure (11e) de la zone de contact (11) n'est pas supérieure à 2 mm.

2. Assemblage selon la revendication 1, dans lequel
l'extrémité radialement extérieure (8e) du caoutchouc d'apex de talon (8) est positionnée axialement à l'intérieur par rapport à la première région (10).

3. Assemblage selon la revendication 1 ou 2, dans lequel
le caoutchouc d'apex de talon (8) a sa portion radialement extérieure (8A) positionnée axialement à l'extérieur de l'extrémité axialement extérieure (5e) de l'âme de talon (5), et
dans une section transversale méridienne du pneumatique (1), l'aire de section transversale de la portion radialement extérieure (8A) n'est pas inférieure à 0,2 fois l'aire de section transversale du caoutchouc d'apex de talon (8).

4. Assemblage selon l'une quelconque des revendications précédentes, dans lequel
l'extrémité radialement intérieure (9i) du caoutchouc d'apex extérieur (9) est positionnée radialement à l'intérieur par rapport à une position radiale (P1) de 2 mm radialement à l'extérieur de l'extrémité radialement extérieure (5j) de l'âme de talon (5).

5. Assemblage selon l'une quelconque des revendications précédentes, dans lequel
l'extrémité radialement extérieure (9e) du caoutchouc d'apex extérieur (9) est disposée à une position axiale (12) d'au moins 10 mm axialement à l'extérieur de la première région (10).
